(19) 

**Europäisches Patentamt**
**European Patent Office**
**Office européen des brevets**

(11)  **EP 4 460 782 B1**

(12)  **EUROPEAN PATENT SPECIFICATION**

(45) Date of publication and mention
of the grant of the patent:
**01.04.2026  Bulletin 2026/14**

(21) Application number: **23708347.2**

(22) Date of filing: **06.01.2023**

(51) International Patent Classification (IPC):
*G06K 19/077* (2006.01)     *H01Q 1/22* (2006.01)

(52) Cooperative Patent Classification (CPC):
**G06K 19/07773; H01Q 1/2208; H01Q 1/38;**
**H01Q 5/378; H01Q 7/00; H01Q 13/16; H01Q 21/24**

(86) International application number:
**PCT/US2023/060262**

(87) International publication number:
**WO 2023/133528 (13.07.2023 Gazette 2023/28)**

(54) **ANTENNA DESIGNS FOR WIDE-BAND, ORIENTATION INSENSITIVE RFID DEVICES**

ANTENNENENTWÜRFE FÜR BREITBANDIGE, AUSRICHTUNGSUNEMPFINDLICHE
RFID-VORRICHTUNGEN

CONCEPTIONS D'ANTENNE POUR DISPOSITIFS RFID INSENSIBLES À L'ORIENTATION À
LARGE BANDE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **06.01.2022  US 202263296963 P**

(43) Date of publication of application:
**13.11.2024  Bulletin 2024/46**

(73) Proprietor: **Avery Dennison Retail Information**
**Services LLC**
**Mentor, OH 44060 (US)**

(72) Inventor: **FORSTER, Ian, J.**
**Mentor, Ohio 44060 (US)**

(74) Representative: **HGF**
**HGF Europe LLP**
**Neumarkter Straße 18**
**81673 München (DE)**

(56) References cited:
**WO-A1-2014/210000     US-A1- 2006 044 769**
**US-A1- 2018 123 221**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

## FIELD

Antenna designs, particularly RFID antenna designs, and RFID devices including the same that provide both wide bandwidth and orientation insensitivity and methods of making and using thereof are described herein.

## BACKGROUND

Wireless identification devices, such as RFID devices, are widely used in tracking and tracing of objects by associating unique identification codes and/or product codes or related information thereto. For example, wireless identification can be used for tracing and tracking of objects in warehouses and/or manufacturing sites or inventories, and various applications associated therewith.

RFID systems typically include a combination of RFID tags and RFID readers. RFID tags typically contain a substrate material (e.g., plastic, paper, etc.), a conductive structure or antenna (e.g., metallic, semi-metallic, organometallic, or organic materials) and an integrated circuit (IC or chip). Additional components can be included depending on the desired functionality chip (e.g., dual mode, etc.).

In some embodiments, the antenna is a dipole antenna. The device/antenna can be tuned to respond to predefined resonance frequency or in a predefined resonance frequency range.

When reading a plurality of RFID tagged items, accuracy of the count of the tagged items and associated information is required. Conventional RFID tags are often provided with a single dipole antenna (planar) configured to operate at a predefined resonance frequency (for example Ultra high frequency UHF RFID tags function at UHF frequency). However, there are limitations with such single dipole antennas. For example, the RFID tags are sensitive to orientation, thus potentially jeopardising the reading accuracy. For example, RFID tagged items can be placed in a random manner and/or in a disorganised orientation. In such a scenario, the accuracy of getting an exact count of the RFID tagged items is not feasible or is inaccurate. Consequently, the efficiency of the entire tracking and tracing system is reduced.

Developments have been made in an attempt to improve read accuracy. For example, dual dipole RFID tags have been developed to improve orientation insensitivity. Furthermore, dual dipole RFID tags can be provided in crossed configuration to facilitate orientation insensitivity. Such dual dipole RFID tags can be configured with two RF power inputs and two RF power outputs, where the sum of rectified RF power from the inputs is required. When the crossed dual dipole is oriented to be read in an edge-on orientation, then the crossed dipole is a function of the cosine of the relative angle, with nulls enacted at 90° and 270° orientations with respect of one dipole to the other. However, the other dipole, as it crosses the first one at 90°, peaks at the same point, so RF power received by the chip is the composite of the power from the two dipoles. In theory, the received radiation pattern of the dual dipole RFID tags is 100% orientation insensitive. However, real time radiation of dual dipole RFID tag is inefficient in providing orientation insensitivity due to peaks that occur at the edges only and relatively lower reflection at the quadrants.

Moreover, there are disadvantages associated with the construction of crossed dual dipole devices, namely the requirement of a minimum four connection points, complex assembly, decreased reliability, larger chip size, and therefore higher input cost, for a given semiconductor process. Moreover, complex configuration and larger sized chips may also limit the applicability of RFID tags and devices, where a smaller input is required for different use cases.

Further, operating frequencies of UHF RFID readers vary in different geographical locations. For example, a standard acceptable operating frequency of UHF range significantly varies in different geographical locations such as ETSI (~EU) band i.e. 860-875 MHz and FCC (~US) i.e. 890-930 MHz, as per country standards or governing body standards. In such scenarios, conventional wireless communication devices or UHF RFID tags or dual dipole RFID tags are required to operate at resonance frequency requirements for ETSI (~EU) and FCC (~US) standards. Since, the tracking and tracing for supply chain management of goods have been scaled globally, it is necessary that devices used for supply chain management can communicate on different frequencies so that one device may be used for various applications. Currently, conventional wireless communications devices adapted for informative and tracking purposes are limited to communication at only one frequency for the United States or abroad. In such a situation, along with the orientation sensitivity described above, there are limitations with respect to the operating frequency of a single tag to operate in different geographical locations.

US 2018/123221 A1 describes a coupling frames comprising a conductive (metal) surface with a slit (S) or non-conductive stripe (NCS) extending from an outer edge to an inner position thereof, and overlapping a transponder device. A coupling frame with slit for coupling with an inductive or capacitive device (inductor or capacitor) is used at any ISM frequency band to concentrate surface current around the slit. The coupling frame can be tuned to operate at a frequency of interested by introducing a resistive, inductive or capacitive element. The resonance frequency of the coupling frame can be matched to that of the transponder chip module to achieve optimum performance.

WO 2014/210000 A1 describes washable tags using a large area antenna conductor. The merchandise tags, patches, inlays and labels are provided for mounting on garments, fabrics, apparel accessories and other flexible merchandising materials. The robust merchandise tags combine a hybrid-slot loop antenna structure with an uncharacteristically large area conductor sheet in the nature of a foil or the like.

There is a need to overcome the abovementioned limitations and drawbacks related to conventional wireless communication devices i.e. RFID tags. Furthermore, there is a need for RFID tags that are capable of operating at the frequencies of various geographical locations with efficient orientation insensitivity.

Therefore, it is an object of this disclosure to provide RFID devices, and methods of making and using thereof, that overcome the design, cost, and performance limitations described above. It is further an object of this disclosure to RFID devices, and methods of making and using thereof, capable of operating at the frequencies of various geographical locations with efficient orientation insensitivity.

## SUMMARY

The claimed invention is defined by the subject-matter of the independent claims. Preferred embodiments are defined by the dependent claims. The following presents a general summary in order to provide a basic understanding of some aspects of the disclosed innovation. This summary is not an extensive overview, and it is not intended to identify or limit key/critical elements or to delineate the scope thereof. Its sole purpose is to present some concepts in a general form as a prelude to the more detailed description that is presented later.

RFID devices, and methods of making and using thereof, with increased or improved orientation insensitivity and the ability to operate at multiple frequencies/frequency ranges are described herein.

In some embodiments, the RFID tag including RFID device exhibits improved performance compared to commercially available dual dipole tags, e.g., AD681, on difficult dielectrics, such as those provided by NXP. On low dielectric materials, modified tuning, to drop the response down in frequency, may give a better match. Performance for the RFID Device is typically better edge on rather than face on, and the sloop is polarization sensitive face on unlike the AD681.

In some embodiments, the first resonator and the second resonator may be influenced under electromagnetic radiation. In some embodiments, the first resonator and the second resonator may be influenced/interrogated/read by an RFID reader.

To the accomplishment of the foregoing and related ends, certain illustrative aspects of the disclosed innovation are described herein in connection with the following description and the annexed drawings. These aspects are indicative, however, of but a few of the various ways in that the principles disclosed herein may be employed and are intended to include all such aspects and their equivalents. Other advantages and novel features will become apparent from the following detailed description when considered in conjunction with the drawings.

## BRIEF DESCRIPTION OF THE DRAWINGS

The summary above, as well as the following detailed description of illustrative embodiments, is better understood when read in conjunction with the appended drawings. For the purpose of illustrating the present subject matter, exemplary constructions of the subject matter are shown in the drawings. However, the present subject matter is not limited to specific methods and instrumentalities disclosed herein. Moreover, those in the art will understand that the drawings are not to scale. Wherever possible, like elements have been indicated by identical numbers.

Embodiments of the present subject matter will now be described, by way of example only, with reference to the following diagrams wherein:

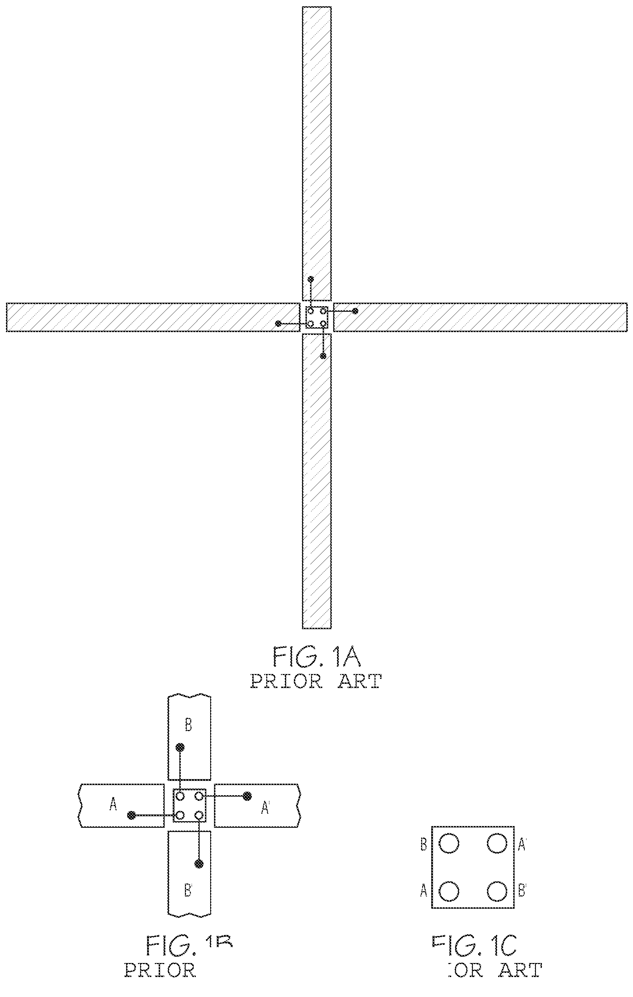

FIG. 1A through 1C illustrates a prior art example of a dual port chip having two (2) radio frequency (RF) inputs;

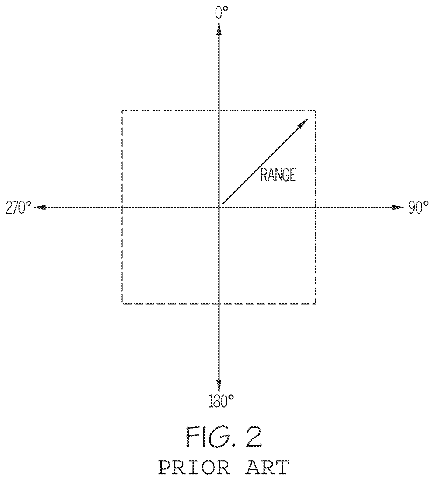

FIG. 2 illustrates a prior art example of the radiation pattern of a crossed dipole;

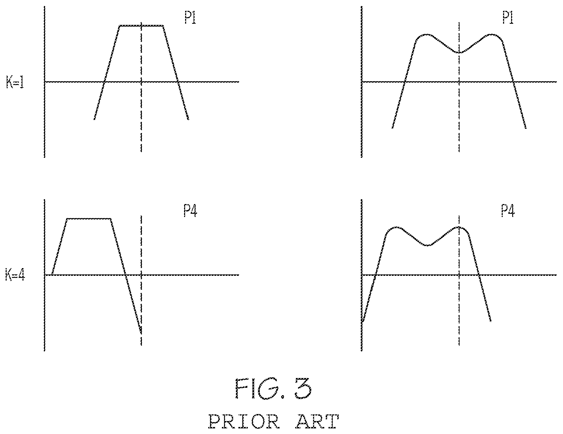

FIG. 3 illustrates a prior art example of a graph showing the difference between narrow- and wide-band tags with varying dielectric;

FIG. 4 illustrates a schematic illustration of RFID device, in accordance with various exemplary embodiment of the present subject matter;

FIG. 5A illustrates a geometry of a second resonator having a loop conductor and a chip, in accordance with some embodiment of the present subject matter;

FIG. 5B illustrates a schematic illustration of various shapes of a second resonator, in accordance with various exemplary embodiment of the present subject matter;

FIG. 6A illustrates a plan view of a first resonator with a conductive member, in accordance with some embodiment of the present subject matter;

FIG. 6B illustrates a schematic illustration of various shapes of a first resonator, in accordance with various exemplary embodiment of the present subject matter;

FIG. 7 illustrates a graph showing a composite frequency response of an RFID device having a first resonator and a second resonator, in accordance with some embodiment of the present subject matter;

FIG. 8 illustrates the radiation pattern of the RFID device 400, in accordance with various exemplary embodiment of the present subject matter;

FIG. 9A illustrates a schematic illustration of a first resonator, not in accordance with the claimed subject matter;

FIG. 9B illustrates a schematic illustration of an inter-digital capacitor to be accommodated within a first resonator, in accordance with various exemplary embodiment of the present subject matter, and a parallel plate capacitor and a ceramic capacitor to be accommodated within a first resonator, not in accordance with the claimed subject matter;

FIG. 10 is another illustration of an exemplary RFID device, in accordance with an exemplary embodiment of the present subject matter;

FIG.11 shows a flowchart depicting a process for operating an RFID device, in accordance with an exemplary embodiment of the present subject matter;

FIG. 12 is a graph comparing the power on tag forward (dBm) as a function of frequency for an exemplary WBS tag (dotted line) and a dual diploe tag (solid line), AD681, edge-on on cardboard;

FIG. 13 is a graph comparing the power on tag forward (dBm) as a function of frequency for an exemplary WBS tag (dotted line) and a dual diploe tag (solid line), AD681, face-on on cardboard;

FIG. 14 is a graph comparing the power on tag forward (dBm) as a function of frequency for an exemplary WBS tag (dotted line) and a dual diploe tag (solid line), AD681, edge-on on poly(methylene) oxide (POM);

FIG. 15 is a graph comparing the power on tag forward (dBm) as a function of frequency for an exemplary WBS tag (dotted line) and a dual diploe tag (solid line), AD681, face-on on poly(methylene) oxide (POM);

FIG. 16 is a graph comparing the power on tag forward (dBm) as a function of frequency for an exemplary WBS tag (dotted line) and a dual diploe tag (solid line), AD681, edge-on on FR4;

FIG. 17 is a graph comparing the power on tag forward (dBm) as a function of frequency for an exemplary WBS tag (dotted line) and a dual diploe tag (solid line), AD681, face-on on FR4;

FIG. 18 is a graph comparing the power on tag forward (dBm) as a function of frequency for an exemplary WBS tag (dotted line) and a dual diploe tag (solid line), AD681, edge-on on Carp;

FIG. 19 is a graph comparing the power on tag forward (dBm) as a function of frequency for an exemplary WBS tag (dotted line) and a dual diploe tag (solid line), AD681, face-on on Carp; and

FIG. 20 is a graph showing the radiation pattern of an exemplary WBS tag (dotted line) and AD681 (solid line) on cardstock at 915 MHz.

In the accompanying drawings, an underlined number is employed to represent an item over that the under lined number is positioned or an item to that the under lined number is adjacent. A non-underlined number relates to an item identified by a line linking the non-underlined number to the item. When a number is non-underlined and accompanied by an associated arrow, the non-underlined number is used to identify a general item at that the arrow is pointing.

## DETAILED DESCRIPTION

In overview, some embodiments of the present subject matter relate to identifying association of an entity. Some embodiments include providing validated associations of the entity, and the associations may be determined based on at least one of: frequency, proximity, and semantics thereof.

The following detailed description illustrates various embodiments of the present subject matter and ways in that they may be implemented. Although some modes of carrying out the present subject matter have been disclosed, those skilled in the art would recognize that other embodiments for carrying out or practicing the present subject matter are also possible. Some disclosed embodiments include one or more devices, and/or systems for achieving orientation insensitivity and wide bandwidth to the RFID devices have been disclosed herein. Furthermore, terms RFID devices or sloop antenna devices refers to the wireless identification devices discussed in detail in the embodiments of the present subject matter.

### I. Definitions

"Capacitor" as used herein refers to an electrical device that includes two conducting plates separated by an insulating material called a dielectric.

"Inter-digital capacitor", as used herein, refers to a multi-finger periodic structure for radio frequency development. Interdigital capacitors use the capacitance that occurs across a narrow gap between conducting elements.

"RFID" as used herein refers to radio frequency identification devices.

"Resonator" as used herein refers to a component or material that pertains electrical resonance, particularly in response to radio waves. As used herein the resonator may include a first resonator and a second resonator.

"RFID Device" as used herein in refers to a device in general that includes an antenna and an integrated circuit (chip).

"Sloop" as used herein refers to a hybrid antenna structure that includes both a loop antenna and a slot antenna.

"Substrate" as used herein refers to a dielectric material. The dielectric material is a non-metallic substance having a high specific resistance.

"RFID tag" as used herein refers to label including the RFID device that may be attached to any goods/objects to track and trace the goods/objects.

"Radiation pattern" as used herein refers to a visual representation of the radiation emission or reception of wave front at an antenna.

"First frequency" as used herein refers to a resonance frequency of the first resonator. Furthermore, the first frequency is a function of a capacitive reactance of the capacitor and a resistance of a sheet (as described herein below).

"Second frequency" as used herein refers to a resonance frequency of the second resonator. Furthermore, the second frequency is a function of impedance of chip and reactive inductance of a loop conductor (as described herein below).

"Threshold frequency" as used herein refers to a minimum frequency required for an RFID device to respond to an RF signal. Furthermore, when the RFID device is exposed to an external RF frequency, the RFID device resonates at the threshold frequency of the RFID device and performs impedance matching to respond to the external RF frequency.

"Perimeter" as used herein refers to the boundary of a closed plane sheet.

"Antenna" as used herein refers to a conductor configured for receiving electromagnetic radiation and converting the electromagnetic radiation into radio frequency electrical signals on the receiver's end. During transmission, the analogue radio frequency electric signals are converted by the antenna into electromagnetic radiation and spread in all directions in the surrounding medium (such as air).

These and other features, aspects, embodiments, and advantages of the present subject matter will be better understood with reference to the below stated description and appended claims. These definitions are provided to introduce a selection of concepts in a simplified form. These definitions are not intended to identify key features or essential features or key words of the claimed or disclosed subject matter, nor is it intended to be used to limit the scope of the claimed subject matter.

## II. Wide-Band, Orientation-Insensitive RFID Tag

The RFID tags disclosed herein are described in detail by way of examples and with reference to the figures. Unless otherwise specified, like numbers in the figures indicate references to the same, similar, or corresponding elements throughout the figures. It will be appreciated that modifications to disclosed and described examples, arrangements, configurations, components, elements, apparatuses, methods, materials, etc. may be made and may be desired for a specific application.

In the present disclosure, any identification of specific shapes, materials, techniques, arrangements, etc. are either related to a specific example presented or are merely a general description of such a shape, material, technique, arrangement, etc. Identifications of specific details or examples are not intended to be, and should not be, construed as mandatory or limiting unless specifically designated as such. Selected examples of apparatuses and methods are hereinafter disclosed and described in detail with reference made to FIGURES.

In some embodiments, the present subject matter relates to an RFID device that includes a first resonator and a second resonator. Both resonators are designed, constructed and configured in such a way that the RFID device utilises such resonators as an antenna to create a wide-band and orientation insensitive tag when exposed radio wave containing one or more frequencies.

In some embodiments, the first resonator includes a sheet of electrically conductive material defining an area covered by a perimeter. The first resonator further includes a slot defined by two opposing sides formed on the sheet and the slot extends from an open end of an edge of the perimeter of the sheet to a closed end stretching within an internal region of the sheet. Furthermore, the opposing sides as used herein forms a slit originating from the open end of the edge of the sheet and extends to the closed end of the slot formed by removal of the material of the sheet.

In some embodiments, a conductive member is positioned between the open end and the closed end of the slot according to one embodiment herein. The conductive member is contoured by the slot in the region between the open end and the closed end. In some embodiment one end of the conductive member is connected and/or integrated into the first resonator and is open on the other end and extends into the slot. The conductor is flanked by the one of the opposing sides of the slot at some part of the slot and also contoured by the first resonator. The construction thus formed operates as capacitor because this is akin to two conductors positioned side by side and separated by an insulator such as the slot.

In some embodiments, the second resonator includes a loop conductor coupled to an integrated circuit (chip) that is a RFID chip. The second resonator is contained within the closed end of the slot that assumes a shape appropriate to contain the loop conductor based on its shape and geometry and is spaced from the opposing sides by a gap according to an embodiment herein. In some embodiment the closed end of the slot is either circular or rectangular or oval or trapezoidal or elliptical or square or an irregular shape. In accordance with an embodiment, the first resonator and the second resonator are co-planar to each other. In one embodiment, the RFID device is formed on a substrate.

In some embodiments, the RFID devices described herein have two resonators that give a read capability that is good over a wide variety of orientations, and may be substantially orientation independent. Note that this description refers to the terms "RFID device" and "wide-band sloop (WSB) antenna" interchangeably.

Throughout the present subject matter, the RFID device herein refers to wireless identification devices used for tracing and tracking of objects (known in the art). The RFID device as used herein is purposefully designed and configured to achieve orientation insensitivity and wide bandwidth. The orientation insensitivity refers to readability of the RFID device used herein with all the directions possible and efficient reflection of Radio Frequency Signal back to the RFID readers when operated. For example, the RFID device is in an orientation angle such as "FACE-ON" when activated or in an orientation angle such as "EDGE-ON" to the RFID reader. Furthermore, the orientation insensitivity is achieved through generating signals in a circularly polarised radiation. Moreover, the circular polarisation is the resultant output signals of the first resonator and the second resonator, when activated from the RFID readers. As described in the present subject matter herein, the wide bandwidth refers to a configuration of the RFID device that enables functioning of the RFID device used herein at two distinct resonance frequencies and hence providing a wide bandwidth of operation. Notably, the wide bandwidth is achieved by the first resonator operating at a first frequency and the second resonator operating at a second frequency.

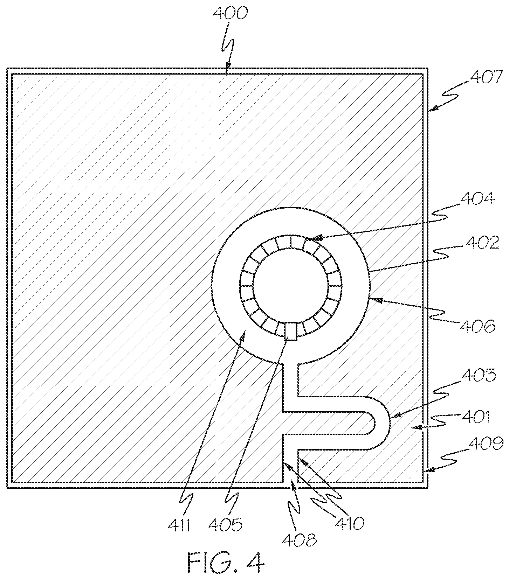

The configuration shown in FIG. 4 illustrates a schematic illustration of an RFID device 400. The RFID device 400 for RFID tag that has both a wide-band dual response and an orientation insensitivity is described herein. An example of such an RFID device 400 is shown in FIG. 4. RFID tag containing such RFID device 400 is also described herein. The RFID device 400 includes a substrate 407 and an antenna structure having a first resonator 401, a second resonator 402. In some embodiments, the second resonator 402 is embedded and/or contained within the first resonator 401. Furthermore, the second resonator 402 is in the same plane with the first resonator 401. In an example, the first resonator 401 and the second resonator 402 may be manufactured of same material.

The first resonator 401 includes a sheet of electrically conductive material defining an area covered by a perimeter 409. The conductive material may include metal or any other electrically-conductive materials known in the art and may be selected for a particular antenna and/or intended application. The sheet of electrically conductive material contains a slot 402. The slot 402 defined by two opposing sides 410 and the slot 402 being extended from an open end 408 of an edge of the perimeter 409 of the sheet to a closed end 406 stretching within an internal region of the sheet. The sheet may also contain one or more notches and/or protrusions. For instance, notches are designed to prevent interference from larger electromagnetic signals. The slot 402 may be cut from the sheet of conductive material of the first resonator 401 at various locations such as shown in the FIG. 4. Furthermore, cutting may be accomplished via mechanical die cutting, etching, laser cutting or any other suitable means to cut and then remove the unwanted material. The slot 402 is a non-conductive portion of the first resonator 401. For instance, the slot 402 may be larger in dimensions with respect to the second resonator 404. This non-conductive portion may be air or any dielectric medium or insulator. The loop conductor 404 is contained within the circular closed end 406 of the slot 402. Furthermore, the loop conductor 404 may be manufactured using the same material of the sheet of the first resonator 401. In an example, the loop conductor 404 may be constructed by die cutting the sheet to define the slot 402 and the loop conductor 404. According to an embodiment, the loop conductor 404 is co-planar to the sheet of the first resonator 401. The RFID device 400 includes a conductive member 403 is positioned between an open end 408 of the slot 402 and a circular closed end 406. For instance, the structure of the first resonator 401 includes a large proportion of surface area covered by the sheet. Thus, the length of the area between the slot 402 and the perimeter 409 of the sheet may be greater than width of the slot.

The second resonator 402 that is a loop conductor 404 is coupled to an integrated circuit (chip) 405. The chip 405 typically is an RFID chip. The loop conductor 404 in the second resonator 404 is electrically or inductively coupled to the chip 405. For example, in electrical coupling, the loop conductor 404 and chip 405 may be connected using an electric connection such as a wire and the like. Further, in inductive coupling, the chip 405 and the loop conductor 405 may be coupled via a magnetic field. The second resonator 402 is contained within the circular closed end 406 of the slot 402 and is spaced by a gap 411 from the opposing sides 410. The opposing sides 410 of the slot 402 starts at the open end 408 and extend gradually into the internal region of the sheet. The opposing sides 410 merge with each other at the closed end 406. The second resonator 404 is inductively or capacitively coupled to the first resonator 401. For example, in capacitive coupling, the loop conductor 404 and chip 405 may be connected using a capacitor.

Further, the first resonator 401 is configured to operate at a first frequency. The second resonator 404 is configured to operate at second frequency. The conductive member is configured to tune the first resonator to resonate at the first frequency. The resonance of the first resonator 401 is a function (Fn) of a capacitive reactance of the capacitor (C1) and an area (A1) of the sheet. The resonant frequency of the first resonator 401 is shown in Equation 1.

$$F1 = Fn\ [C1.\ A1]\ \text{............................}\ [\text{Equation 1}]$$

The second resonator 404 is configured to operate at a second frequency. The resonant response of the second resonator 404 is a function (Fn) of impedance of the chip (C2) and reactive inductance of the loop conductor (L1). The resonant frequency of the second resonator 404 is shown in Equation 2.

$$F2 = Fn\ [C2.\ L1]\text{.......................}\ [\text{Equation 2}]$$

In an embodiment, the loop conductor is configured to receive RF power from incoming electromagnetic wave transmitted from an RFID reader (no shown in Fig) via a feeding structure. Further, the loop conductor is configured to supply the received RF power to the chip 405. The loop conductor is also configured to radiate excited energy when RF power flows through the loop conductor. This exited energy is transferred from the loop conductor to the first resonator 401 because the first resonator 401 and the second resonator 404 are magnetically or capacitively coupled with each other. Further, transfer of the excited energy constitutes an asymmetric current flow in the first resonator 401. Asymmetric surface current's concentration on the sheet surface constitutes the asymmetric current flow. The concentration of the asymmetric surface current depends on characteristics of the first resonator 401. For example, the characteristics of the first resonator 401 may include a size of the sheet, a shape of the sheet, an area of the sheet, and an operating frequency.

FIG. 4, illustrates a top view of the RFID device 400 having the first resonator 401 and the second resonator 404 formed on the substrate 407. The conductive layer or sheet of the first resonator 401 may be formed, deposited or adhered onto the substrate 407 by any of a variety of suitable methods. For example, the sheet may be a conductive ink, such as an ink containing metal particles, that is printed onto the substrate 407 in a suitable pattern. Alternatively, the sheet may be plated onto the substrate 407, such as by electroplating. As another alternative, the sheet may be adhesively adhered to the substrate 407. Etching may be used to remove conductive material to form the slot 402. Further, the second resonator 404 is placed on the substrate 407 and within the circular closed end of the slot 402. The second resonator 404 may be placed or adhered onto the substrate 407 using adhesive or any other suitable means by that to attach the second resonator 404 to the substrate 407. The substrate 407 may be any material known in the art and may be selected for a particular antenna and/or intended application. Examples include, but are not limited to, VY cardstock, poly(methylene) oxide (PMO), glass-reinforced epoxy laminate material (FR4), and carp.

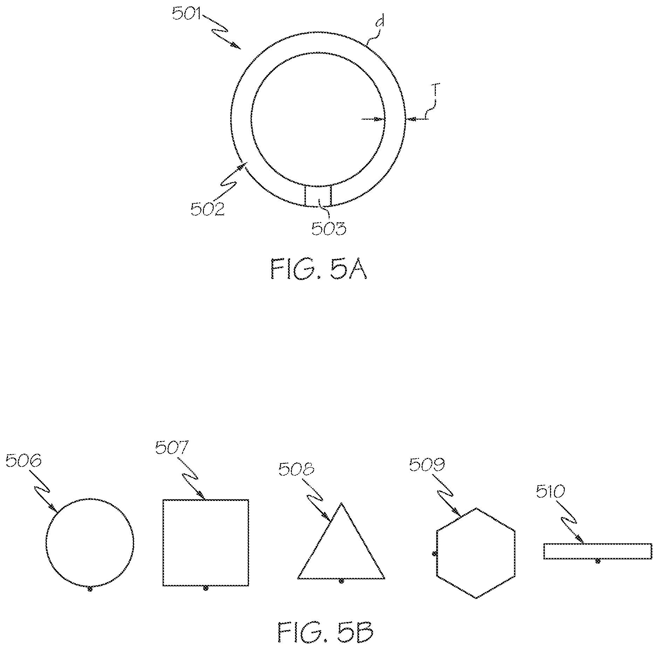

FIG. 5A illustrates a geometry of a second resonator 501 having a loop conductor 502 and a chip 503, in accordance with some embodiments of the present subject matter. The loop conductor 502 is inductively or electrically coupled to the chip 503. The shape of the loop conductor 502 of this embodiment is a circle. The geometry of the second resonator 501 antenna operating at second frequency is shown in Equation 3.

$$L1 = Fn\ [d.\ T] \dots\dots\dots\dots\dots\dots\dots\dots [Equation\ 3]$$

The loop conductor 502 has a loop with diameter 'd', and thickness of the loop is 'T'. The inductance of the loop conductor 502 is a function of a loop diameter and a loop thickness. The loop conductor is connected to power feed terminals or the feeding structure (not shown in Fig) via connecting conductors (not shown in Fig). The power feed terminals to that the power feed circuit or coaxial cables are connected to feed the RF power to the first resonator 401 (as shown in Fig.4) and the second resonator 404 or 501, received from the incoming RF signals. Further, the chip impedance is one of a function of a parallel capacitance (Cp), parallel inductance (Xr), parallel resistance (Rp), and combinations thereof.

FIG. 5B illustrates a schematic illustration of various shapes of the second resonator 501, in accordance with various exemplary embodiments of the present subject matter. The "second resonator" as used herein refers to a conductor and/or conductive element of an RFID antenna (the RFID antenna may include convention RFID tag antenna known in the art). The second resonator 501 comprises a loop conductor and an integrated chip or a chip that stores data. Furthermore, the loop conductor is one of shape of a circle 506, a square 507, a triangle 508, a hexagon 509, and a rectangle 510.

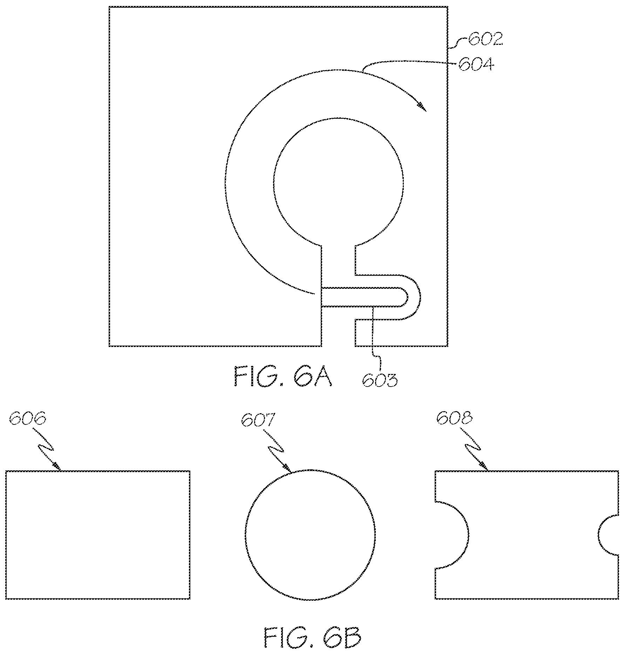

FIG. 6A illustrates a plan view of a first resonator 602 with a conductive member 603, in accordance with some embodiments of the present subject matter. The first resonator 602 comprising a sheet of electrically conductive material 603 and defining an area covered by a perimeter (as shown in Fig.4). The first resonator 602 is excited by the second resonator 404. Because of excitation current being distributed through the sheet. Current follows a path depicted as composite path 604. The path is a function of shape and dimension of the sheet.

Further, the slot defined by opposing sides 410 and the slot being extended from the open end of the edge of the perimeter of the sheet to the closed end stretching within the internal region of the sheet. The open end is connected to the circular closed end with the conductive member 603 such as a capacitor. The capacitor is configured provide a predetermined impedance by adjusting or tuning. Tuning is adjustment of capacitance value. For example, consider present impedance of the first resonator 602 is not matched with the predetermined impedance, then the conductive member 603 is configure to adjust the first resonator 602 impedance to predetermined impedance by adjusting capacitance value. For instance, capacitance value may be varied from 0.1 pF to 1 pF. The value of capacitance is only an example and should not be considered as a limitation.

FIG. 6B illustrates a schematic illustration of various shapes of the first resonator 602, in accordance with various exemplary embodiment of the present subject matter. The "first resonator" as used herein refers to a conductor and/or conductive element of an RFID antenna (the RFID antenna may include convention RFID tag antenna known in the art). The first resonator 602 comprises a slot defined by opposing sides (opposing sides 410 as shown in Fig.4). The "slot" (slot 402 as shown Fig.4) as used herein refers to a carved out are formed by removing the conductive material out of the first resonator 602. Furthermore, the slot herein facilitates accommodation of additional conductors and/or semiconductors therein to enable various electronic, electrical and/or electromagnetic properties that enhances the efficiency and functioning of the RFID device 400 (as shown in Fig.4) as described herein. Furthermore, the first resonator 602 may include a shape of the sheet is one of a rectangle 606, a circle 607, a parallelogram with semicircular cuts 608, and. In an embodiment, the first resonator 602 may include an irregular shape and/or a regular parallelogram.

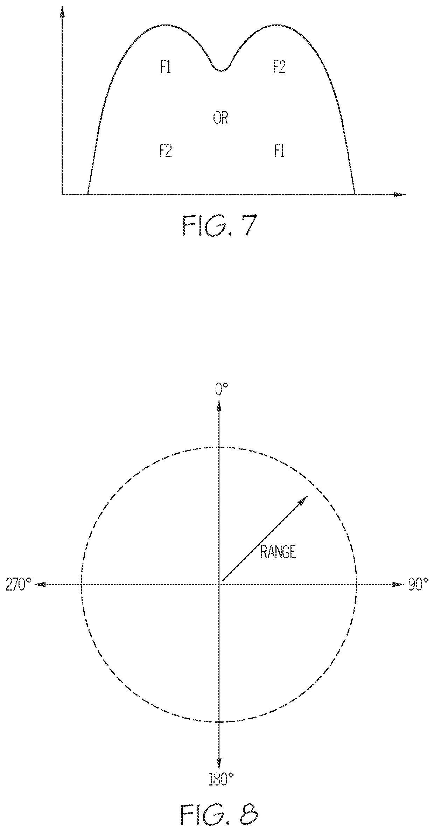

FIG. 7 illustrates a graph showing the composite frequency response of the RFID device 400 (as shown in Fig.4) having the first resonator 401 (as shown in Fig.4) and the second resonator 404 (as shown in Fig.4), in accordance with some embodiment of the present subject matter. As previously discussed, the RFID device 400 has two antenna configurations such as first resonator 401 and the second resonator 404. The first resonator 401 and second resonator 404 may be configured to communicate at different frequencies such as the first frequency (f1) and the second frequency (f2), enabling the RFID device 400 to effectively communicative at both frequencies. Therefore, providing the RFID device 400 with the capability of communicating at both f1 and f2 is advantageous so that the RFID device 400 may be used for applications in both the United States and abroad. The RFID device 400 is sensitive to two frequencies such as f1 and f2. Specific frequency f1 or f2 resonates when the RFID device 400 receives electromagnetic waves from the reader/writer having a frequency f1 or f2. For instance, consider the RFID device 400 is interrogated by an interrogation reader having a frequency of f1 for communication purposes. The first resonator 401 is suitable for f1, then the first resonator 401 resonates at f1 and the capacitor is configured to tune the impedance of the first resonator 401 accordingly to achieve required impedance. In another instance, consider the RFID device 400 is interrogated by an interrogation reader having a frequency of f2 for communication purposes. The second resonator 404 is suitable for f2, then the second resonator 404 resonates at f2 and the RFID chip is configured to tune the impedance of the second resonator 404 accordingly to achieve required impedance.

FIG. 8 illustrates the radiation pattern of the RFID device 400 (as shown in Fig.4), in accordance with various exemplary embodiment of the present subject matter. Referring back to Fig.4, current distribution in the two resonators such as the first resonator 401 (as shown in Fig.4) and the second resonator 404 (as shown in Fig.4) excites circular polarized radiation pattern or elliptical polarized radiation pattern. The radiation pattern is dependent on design of the two resonator elements and how the elements are coupled together. The antenna structure having two resonators 401 and 404 gives a read capability that is good over a wide variety of orientations, and may be substantially orientation independent. For instance, consider present coupling arrangement and design of two resonators 401 and 404 of the RFID device 400 configured to produce circular polarization radiation by generating two perpendicular electric fields ($E_{HOR}$ (horizontal), $E_{VER}$ (vertical)) with the equal amplitude that differ in phase by 90°. In another instance, consider present coupling arrangement and design of two resonators 401 and 404 of the RFID device 400 configured to produce elliptical polarized radiation pattern by generating two perpendicular electric fields ($E_{HOR}$ (horizontal), $E_{VER}$ (vertical)) of unequal amplitude that differ in phase by 90°.

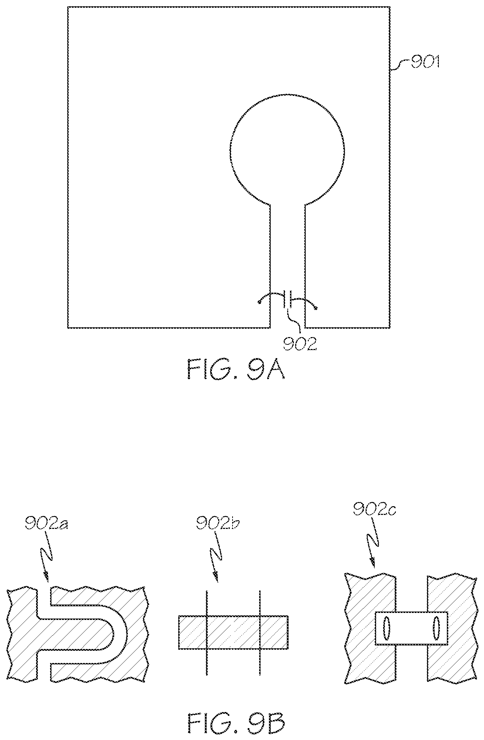

FIG. 9A illustrates a schematic illustration of a first resonator 901, not in accordance with the claimed subject matter. The first resonator 901 comprises a parallel plate capacitor 902.

FIG. 9B illustrates a schematic illustration of an inter-digital capacitor to be accommodated within the first resonator 901, in accordance with various exemplary embodiment of the present subject matter, and various capacitors, not in accordance with the claimed subject matter. The various capacitors include a parallel plate capacitor 902b using a top conductor separated by a dielectric overlapping the gap, and a ceramic capacitor 902c made with ceramic and/or other suitable material that may be added using a conductive connection.

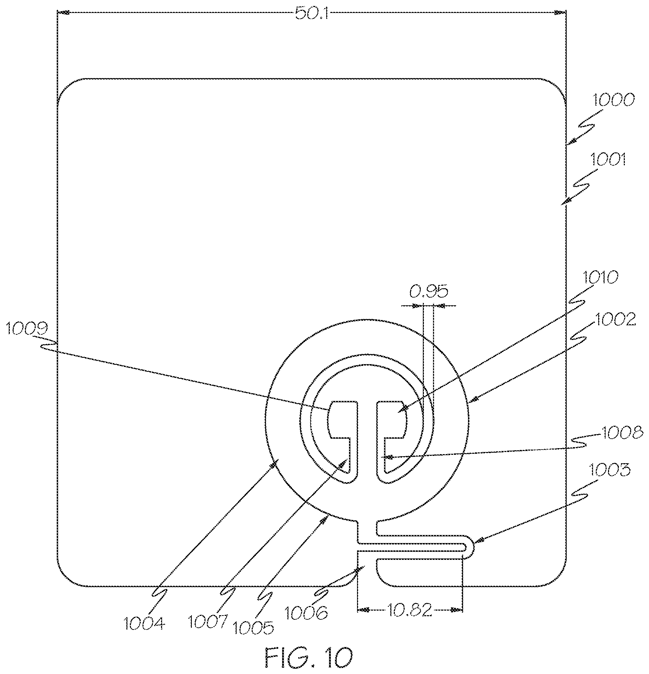

FIG. 10 is another illustration of an exemplary RFID device 1000, in accordance with an exemplary embodiment of the present subject matter. The RFID device 1000 includes a substrate (not shown in fig) and an antenna structure having a first resonator 1001, a second resonator 1002. The first resonator 1001 comprising a sheet of electrically conductive material and defining an area covered by the perimeter (as shown in Fig.4). The conductive material may include metal or any other electrically-conductive materials known in the art and may be selected for a particular antenna and/or intended application. The sheet of electrically conductive material that contains a slot 1004. The slot 1004 defined by opposing sides (as shown in Fig.4) and the slot 1004 being extended from an open end 1006 of an edge of the perimeter of the sheet to a closed end 1005 stretching within an internal region of the sheet. The slot 1006 may be cut from the sheet of conductive material of the first resonator 1001 at various locations such as shown in the Figure.10. Cutting may be accomplished via mechanical die cutting, laser cutting or any other suitable means to cut and then remove the unwanted material. The slot 1004 is a non-conductive portion of the first resonator 1001. This non-conductive portion may be air. The open end 1006 of the slot 1004 is connected to the circular closed end 1005 with a conductive member 1003.

The second resonator 1002 comprising a loop conductor (as shown in Fig.5A) coupled to an integrated circuit (chip) (as shown in Fig.5A). The loop conductor in the second resonator 1002 is electrically or inductively coupled to the RFID chip. The second resonator 1002 is contained within the circular closed end 1005 of the slot 1004 and is spaced by a gap (as shown in Fig.4) from the opposing sides. The opposing sides of the slot 1004 starts at the open end 1006 and extend gradually into the internal region of the sheet. The opposing sides merge with each other at the closed end 1005. The second resonator 1002 is inductively or capacitively coupled to the first resonator 1001. The loop conductor is connected to power feed terminals (1009, 1010) or the feeding structure via connecting conductors (1007, 1008). The power feed terminals (1009, 1010) to that the power feed circuit (not shown in Fig) or coaxial cables (not shown in Fig) are connected to feed the RF power to the second resonator 1002, received from the incoming RF signals. Further the RF power is induced to the first resonator 1001 by means of coupling. For example, the RFID device 1000 of the configuration shown in FIG 10, having outer dimensions of 50.1 mm×50.1 mm, loop conductor has 0.95 mm thickness and conductive member 1003 having 10.82mm length.

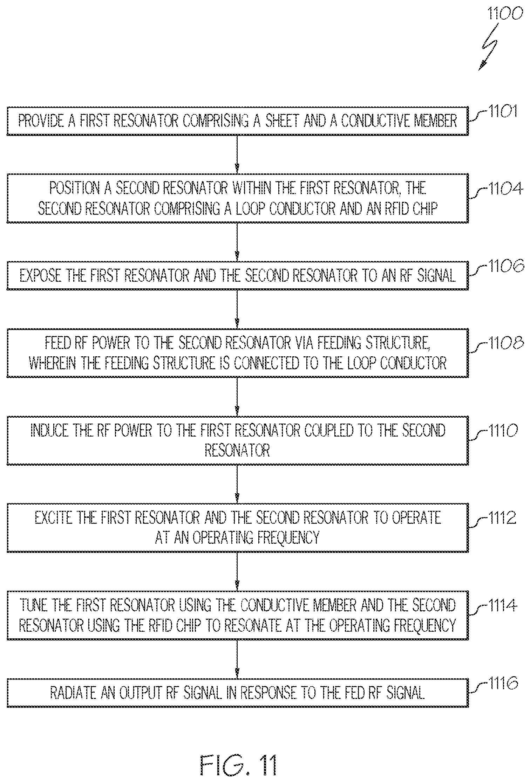

FIG. 11 illustrates a flowchart depicting a method for operating an RFID device, in accordance with an exemplary embodiment of the present subject matter. The method steps 1101 to 1116 explained below herein with respect to the Fig.4 and Fig. 10. It may be appreciated that the method steps 1101 to 1116 are referred and aligned in lines of the embodiments of the present subject matter explained herein above as described in the Fig.4 and Fig. 10. The steps illustrated herein are for understanding and explanation, may not be limited with the context of the method steps. Furthermore, the method steps as sequenced herein may vary and alter with scenarios, circumstances and situations. Furthermore, the accommodation of required steps, within the scope of the present subject matter, may be performed based on requirements.

At step 1101, now referring to Fig. 4 (as mentioned herein above), the first resonator 401 comprising the sheet and the conductive member 403 is provided. For instance, consider the sheet having the perimeter 409 of square shape. The slot 402 (as shown in Fig. 4) is created within the sheet by means of cutting. The cutting may be accomplished via mechanical die cutting, etching, laser cutting or any other suitable means to cut and then remove the unwanted material. Alternatively, the sheet may be plated onto the substrate 407, such as by electroplating. As another alternative, the sheet may be adhesively adhered/attached to the substrate 407. In an embodiment, etching may be used to remove conductive material to form the slot 402.The slot 402 is defined by opposing sides 411 and the slot 402 being extended from the open end 408 of an edge of the perimeter 409 of the sheet to a closed end 406 stretching within the internal region of the sheet. The conductive member is placed between the open end 408 and the closed end 406 and is contoured by the slot 402 in between. The first resonator 401 and the second resonator 404 are formed on the substrate 407.

At step 1104, referring to Fig. 4 (as mentioned herein above), the second resonator 404 is positioned within the first resonator 401. The second resonator 404 comprising the loop conductor (as shown in Fig.5A) and the RFID chip 405. The second resonator 404 is positioned by placing the second resonator 404 within the closed end of the slot 402 and leaving the gap 411 between the first resonator 401 and the second resonator 404.

At step 1106, referring back to Fig. 4 (as mentioned herein above), the RFID device 400 including the first resonator 401 and the second resonator 404 is exposed to a Radio Frequency (RF) signals (not shown in Fig). The exposing comprises interrogating the RFID device 400 via an interrogator (not shown in Fig). The interrogation includes transmission of an interrogation signal to retrieve data from the RFID device through RFID chip 405. For example, the interrogator may be an RFID reader, and the like. In another example, the interrogation may include attempting a detection of the RFID device through the RFID reader to achieve and/or obtain a communication between the RFID device and the RFID reader for transmission of information through signal transmission.

At step 1108 and 1110, referring to Fig.4 and Fig.10 (as mentioned herein above), RF power received from the transmitted interrogation signal is fed to the second resonator 404 or 1001 via the feeding structure. The second resonator 1002 is inductively or capacitively coupled to the first resonator 1001. The loop conductor is connected to power feed terminals (1009, 1010) or the feeding structure via connecting conductors (1007, 1008). The power feed terminals to that the power feed circuit (not shown in Fig) or coaxial cables (not shown Fig) are connected to feed the RF power to the second resonator 1002, received from the incoming RF signals. Further the RF power is induced to the first resonator 1001 by means of coupling (inductively or capacitively). The power feed terminals (1009, 1010) to that the power feed circuit (not shown in Fig) or coaxial cables (not shown Fig) are connected to feed the RF power to the first resonator 1001.

At step 1112, RF power distribution in the first resonator 401 and the second resonator 402 constitutes an excitation of the first resonator 401 and the second resonator 402 resulting in current flow in the first resonator 401 and the second resonator 402.

At step 1114, referring to Fig.4 (as mentioned herein above), the first resonator 401 is tuned or impedance matching using the conductive member 403 and the second resonator 404 tuned using the RFID chip 405 to resonate at the operating frequency. Furthermore, the operating frequency is a composite frequency of the RFID device 400. The operating frequency comprises a first frequency or a second frequency. In an embodiment, the impedance matching is performed for the first resonator with the capacitive reactance of the conductive member to operate at the operating frequency. In another embodiment, the impedance matching is performed for the second resonator 404 with the RFID chip 405 to operate at the operating frequency.

In an example scenario, consider the RFID device 400 includes a determining circuit (not shown in Fig) is configured detect frequency of electromagnetic waves received by the second resonator 402. The RFID device 400 is configured to match the impedance in accordance with information from the frequency determining circuit. As the impedance matching means, capacitance of the capacitor, RFID chip 405 impedance, and inductance of the loop conductor (as shown in Fig.5A) may be used. The determining circuit may include a comparator and is configured to compare the frequency of incoming electromagnetic waves with the threshold frequency of the RFID device 400. Based on the comparison, the impedance matching is performed. For instance, the comparison provides a result that is a difference between incoming frequency of the electromagnetic waves with the threshold frequency of the RFID device 400.

At step 1116, an output RF signal is radiated in response to the fed RF signal from the RFID device (as shown in Fig.4). In one embodiment, the RFID device 400 is configured to radiate the RF signal back to the RFID reader. This ensures the most efficient energy transfer between the antennas (i.e., the first resonator 401 and the second resonator 404) the RFID chip 405.

The performance of exemplary wide-band sloop (WSB) antenna is illustrated in the examples below. As shown in the examples, the WBS tag tends to outperform a dual dipole tag, AD681, on difficult dielectrics. On low dielectric materials, modified tuning, to drop the response down in frequency may provide better performance. Performance for the WBS is typically better edge on rather than face on, and the sloop is polarization sensitive face on unlike the AD681.

Typically, in addition to conductive materials, the RFID devices are also used with many other substrates. Each substrate has its own dielectric characteristics that typically affect the impedance matching between the chip and its antenna. Impedance matching ensures the most efficient energy transfer between an antenna and the chip. The RFID device may be used with a variety of different substrates to obtain optimal impedance matching. Such few examples are explained below in detail.

## EXAMPLES

### Example 1. Evaluation of a Wide-Band, Orientation Insensitive Sloop (WBS) Tag Edge-On On Cardboard.

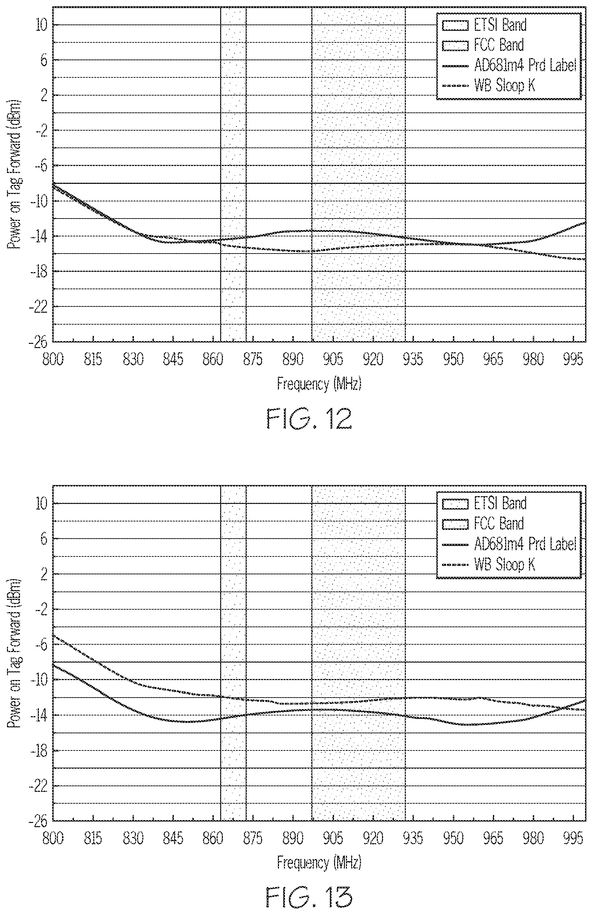

The performance of an exemplary WBS tag was evaluated edge-on on cardboard. The results are shown in FIG. 12. The WBS tag performed better than the AD681 tag, a dual dipole design.

### Example 2. Evaluation of a Wide-Band, Orientation Insensitive Sloop (WBS) Tag Face-On On Cardboard.

The performance of an exemplary WBS tag was evaluated face-on on cardboard. The results are shown in FIG. 13. The WBS tag performed better than the AD681 tag. For face-on applications, a shift down in frequency on the WBS would likely provide a better balance.

### Example 3. Evaluation of a Wide-Band, Orientation Insensitive Sloop (WBS) Tag Edge-On On Poly(methylene) Oxide (POM).

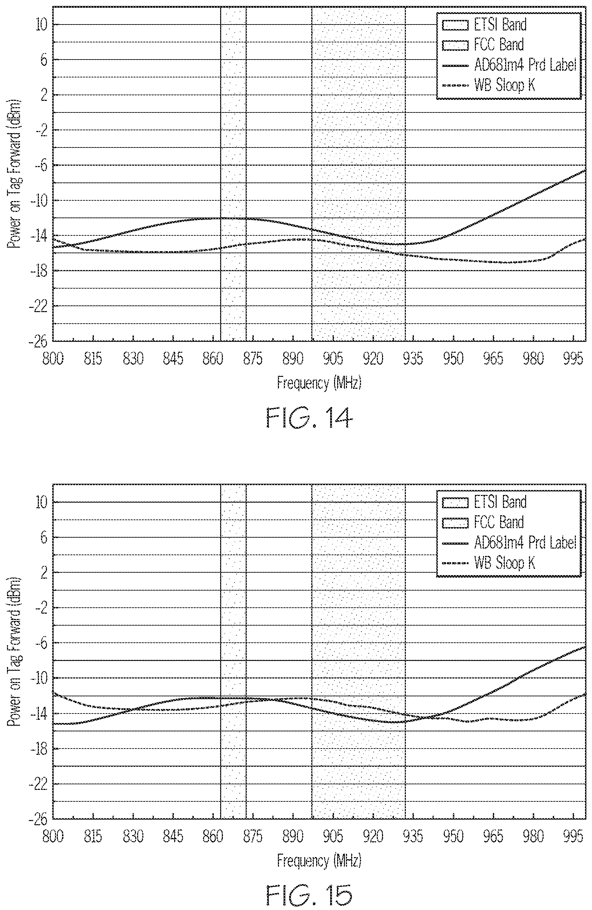

The performance of an exemplary WBS tag was evaluated edge-on on poly(methylene) oxide (POM). The results are shown in FIG. 14. The WBS tag performed better than the AD681 tag.

### Example 4. Evaluation of a Wide-Band, Orientation Insensitive Sloop (WBS) Tag Face-On On Poly(methylene) Oxide (POM).

The performance of an exemplary WBS tag was evaluated face-on on poly(methylene) oxide (POM). The results are shown in FIG. 15. The WBS tag and AD681 exhibited similar performance.

### Example 5. Evaluation of a Wide-Band, Orientation Insensitive Sloop (WBS) Tag Edge-On On Glass-Reinforced Epoxy Laminate Material (FR4).

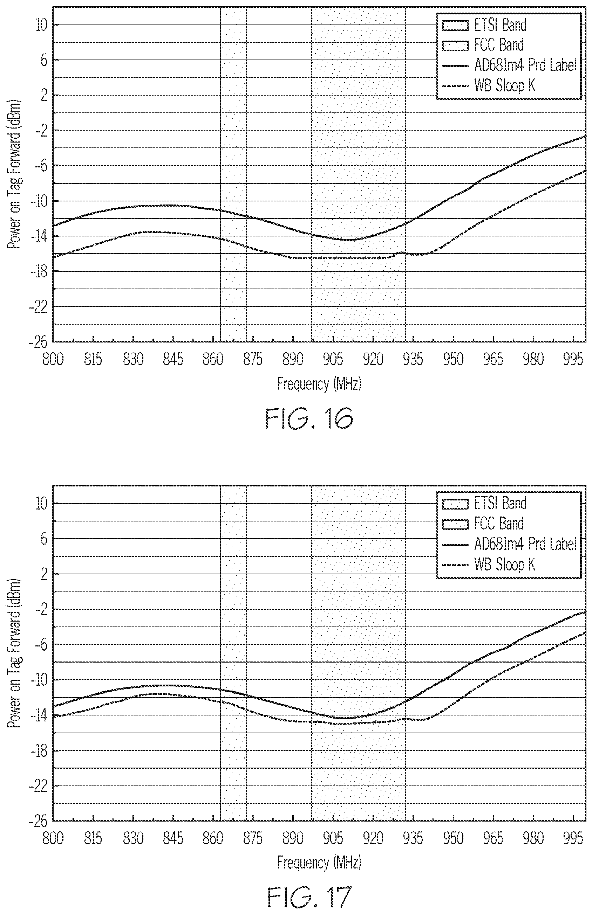

The performance of an exemplary WBS tag was evaluated edge-on on glass-reinforced epoxy laminate material (FR4), a high gloss material. The results are shown in FIG. 16. The WBS tag performed better than the AD681 tag.

### Example 6. Evaluation of a Wide-Band, Orientation Insensitive Sloop (WBS) Tag Face-On On Glass-Reinforced Epoxy Laminate Material (FR4).

The performance of an exemplary WBS tag was evaluated face-on on glass-reinforced epoxy laminate material (FR4), a high gloss material. The results are shown in FIG. 17. The WBS tag and AD681 exhibited similar performance.

### Example 7. Evaluation of a Wide-Band, Orientation Insensitive Sloop (WBS) Tag Edge-On On Carp

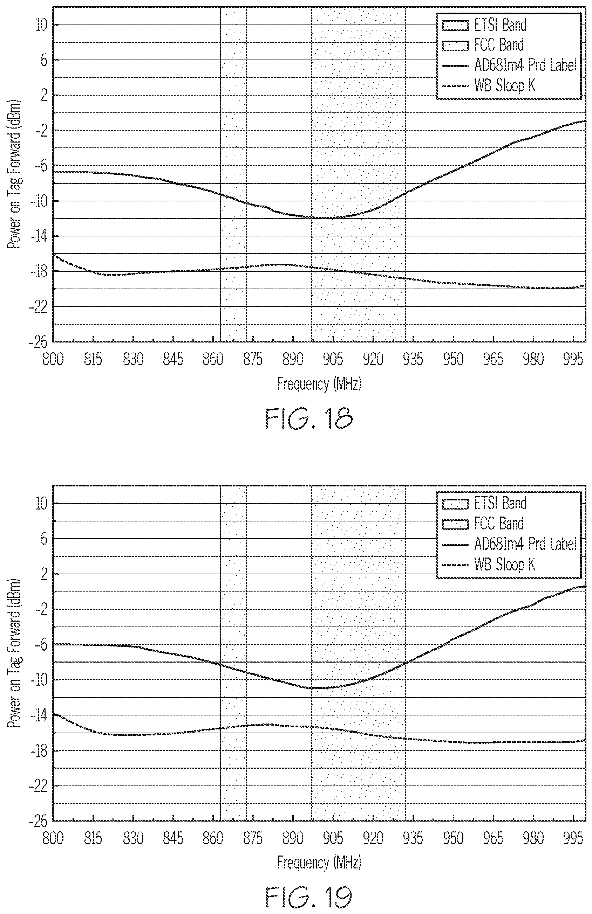

The performance of an exemplary WBS tag was evaluated edge-on on Carp. The results are shown in FIG. 18. The WBS tag performed better than the AD681 tag.

## Example 8. Evaluation of a Wide-Band, Orientation Insensitive Sloop (WBS) Tag Face-on Carp.

The performance of an exemplary WBS tag was evaluated face-on on Carp. The results are shown in FIG. 19. The WBS tag performed better than the AD681 tag.

## Example 9. Comparison of Edge-On Radiation Patterns for WSB and AD681.

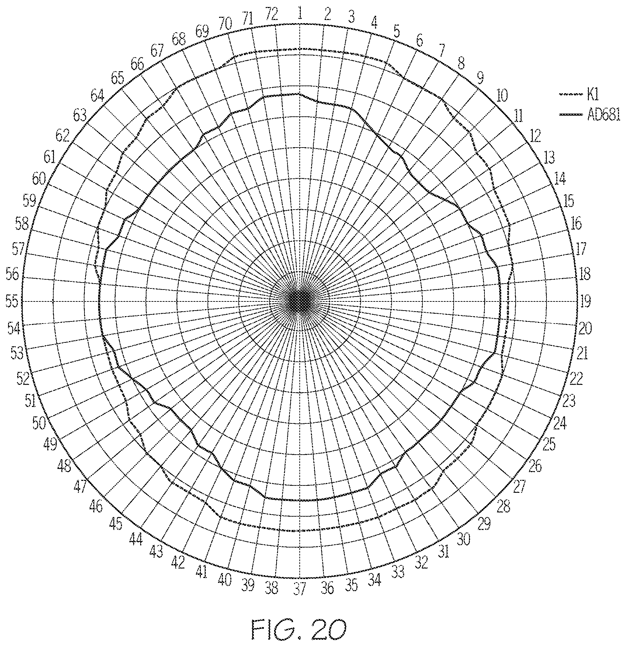

The radiation patterns, edge-on, for an exemplary WSB and AD 681 were measured and compared. The results are shown in FIG. 20. On cardstock at a particular frequency, the absolute radiation pattern for the WBS K1 exceeds the performance of an AD681 at all angles. When normalized, the peak to null for the WBS K1 and AD 681 are similar, ~3.5dB and ~2.5dB, respectively.

Modifications to embodiments of the present subject matter described in the foregoing are possible without departing from the scope of the present subject matter as defined by the accompanying claims.

## Claims

1. An RFID device (400) comprising:

   a first resonator (401) comprising a sheet of electrically conductive material and defining an area covered by a perimeter (409);
   a slot (402) having opposing sides (410) and the slot (402) extending from an open end (408) of the slot (402) starting at an edge of the perimeter (409) of the sheet to a closed end (406) stretching within an internal region of the sheet, wherein a conductive member (403) is placed between the open end (408) and the closed end (406) and is contoured by the slot (402) in a region between the open end (408) and the closed end (406); and
   a second resonator (404) comprising a loop conductor coupled to an integrated circuit chip (405),
   wherein the chip (405) is an RFID chip, **characterized in that**
   the second resonator (404) is contained within the closed end (406) of the slot (402) and is spaced by a gap (411) from the opposing sides (410),
   wherein the second resonator (404) comprises a feeding structure connected to the loop conductor, the feeding structure configured to receive an incoming RF signal and feed RF power to the first resonator (401) and second resonator (404), the RF power received from the incoming RF signal,
   wherein the first resonator (401) and the second resonator (404) are triggered with fed RF power to produce a radiation pattern,
   wherein the first resonator (401) is configured to operate at a first frequency (f1),
   wherein the second resonator (404) is configured to operate at a second frequency (f2), the second frequency (f2) being different from the first frequency (f1), and
   wherein the first resonator (401) and the second resonator (404) are configured to produce circularly polarized radiation pattern.

2. The device (400) of claim 1, wherein the first resonator (401) and the second resonator (404) are formed on a substrate (407), wherein the first resonator (401) and the second resonator (404) are co-planar to each other; or
   wherein the conductive member (403) is configured to tune the first resonator (401) to resonate at the first frequency (f1).

3. The device (400) of claim 1, wherein the conductive member (403) is a capacitor; and optionally
   wherein a resonance of the first resonator (401) is a function of a capacitive reactance of the capacitor and a resistance of the sheet.

4. The device of claim 1, wherein the first resonator resonates when asymmetric current follows a path, wherein the path is a function of shape and dimension of the sheet.

5. The device of claim 3, wherein the capacitor is an inter-digital capacitor.

6. The device (400) of any one of claims 1-4, wherein the closed end (406) of the slot (402) is a circular closed end.

7. The device of claim 1, wherein a shape of the sheet is one of a square, rectangle, circle, triangle and an irregular shape.

8. The device (400) of claim 1, wherein the second resonator (404) is inductively coupled to the first resonator (401); or
   wherein the second resonator (404) is capacitively coupled to the first resonator (401).

9. The device of claim 1, wherein the second resonator (404) is tuned with the chip (405) to resonate at the second frequency (f2); and optionally
   wherein a resonant response of the second resonator (404) is a function of impedance of the chip (405) and reactive inductance of the loop conductor.

10. The device of claim 9, wherein the impedance of the chip (405) is one of a function of a parallel capacitance (Cp), parallel inductance (Xr), parallel resistance (Rp), and combinations thereof.

11. The device (400) of claim 1, wherein a shape of the loop conductor is one of a circular, elliptical, square, rectangular, and triangular; or wherein the loop conductor in the second resonator (404) is electrically or inductively coupled to the chip (405).

12. The device (400) of claim 1, wherein the closed end (406) of the slot (402) is larger than the second resonator (404); or

    wherein the opposing sides (410) of the slot (402) start at the open end (408) and extend gradually into the internal region of the sheet; or wherein the opposing sides (410) merge with each other at the closed end (406).

13. A method (1100) for operating an RFID device (400) according to claim 1, the method (1100) comprising:

    providing (1101) a first resonator (401) comprising a sheet of electrically conductive material, and a conductive member (403); positioning (1104) a second resonator (404) within the first resonator (401), the second resonator (404) comprising a loop conductor coupled to an RFID chip (405)exposing (1106) the first resonator (401) and the second resonator (404) to an RF signal; feeding (1108) RF power to the second resonator (404) via a feeding structure, wherein the feeding structure is connected to the loop conductor; inducing (1110) the RF power to the first resonator (401) coupled to the second resonator (404); exciting (1112) the first resonator (401) to operate at a first frequency (f1) and exciting the second resonator (404) to operate at a second frequency (f2); tuning (1114) the first resonator (401) using the conductive member (403) and the second resonator (404) using the RFID chip (405) to resonate at the first frequency (f1) and the second frequency (f2) respectively, wherein the second frequency (f2) is different from the first frequency (f1); and radiating (1116) an output RF signal as circularly polarized radiation pattern in response to the fed RF signal.

14. The method (1100) of claim 13, wherein positioning the second resonator comprises placing the second resonator within the first resonator, leaving a gap between the first resonator and the second resonator; or wherein exposing (1106) comprises interrogating the RFID device (400) via an interrogator, wherein the interrogation includes transmission of an interrogation signal to retrieve data from the RFID device (400) through the RFID chip (405).

15. The method (1100) of claim 13, wherein the tuning (1114) comprises:

    performing impedance matching for the first resonator (401) with a capacitive reactance of the conductive member (403) to operate at the first frequency (f1); or performing impedance matching for the second resonator (404) with the RFID chip (405) to operate at the second frequency (f2); or wherein the method (1100) further comprises forming the first resonator and the second resonator on a substrate.

**Patentansprüche**

1. RFID-Vorrichtung (400), umfassend:

    einen ersten Resonator (401), umfassend eine Folie aus elektrisch leitendem Material und eine Fläche definierend, die von einem Umfang (409) bedeckt ist; einen Schlitz (402) mit gegenüberliegenden Seiten (410) und wobei sich der Schlitz (402) von einem offenen Ende (408) des Schlitzes (402) ausgehend von einer Kante des Umfangs (409) der Folie zu einem geschlossenen Ende (406) erstreckt, das sich innerhalb eines inneren Bereichs der Folie erstreckt, wobei ein leitendes Element (403) zwischen dem offenen Ende (408) und dem geschlossenen Ende (406) angeordnet ist und durch den Schlitz (402) in einem Bereich zwischen dem offenen Ende (408) und dem geschlossenen Ende (406) konturiert ist; und einen zweiten Resonator (404), umfassend eine Leiterschleife, die an einen integrierten Schaltungschip (405) gekoppelt ist, wobei der Chip (405) ein RFID-Chip ist, **dadurch gekennzeichnet, dass** der zweite Resonator (404) innerhalb des geschlossenen Endes (406) des Schlitzes (402) enthalten ist und durch einen Spalt (411) von den gegenüberliegenden Seiten (410) beabstandet ist, wobei der zweite Resonator (404) eine Einspeisestruktur umfasst, die mit der Leiterschleife verbunden ist, wobei die Einspeisestruktur konfiguriert ist, ein eingehendes HF-Signal zu empfangen und HF-Leistung an den ersten Resonator (401) und den zweiten Resonator (404) einzuspeisen, wobei die HF-Leistung von dem eingehenden HF-Signal empfangen wird,

wobei der erste Resonator (401) und der zweite Resonator (404) mit eingespeister HF-Leistung angesteuert werden, ein Strahlungsmuster zu erzeugen,

wobei der erste Resonator (401) konfiguriert ist, mit einer ersten Frequenz (f1) betrieben zu werden,

wobei der zweite Resonator (404) konfiguriert ist, mit einer zweiten Frequenz (f2) betrieben zu werden, wobei sich die zweite Frequenz (f2) von der ersten Frequenz (f1) unterscheidet, und

wobei der erste Resonator (401) und der zweite Resonator (404) konfiguriert sind, ein zirkular polarisiertes Strahlungsmuster zu produzieren.

2. Vorrichtung (400) nach Anspruch 1, wobei der erste Resonator (401) und der zweite Resonator (404) auf einem Substrat (407) ausgebildet sind, wobei der erste Resonator (401) und der zweite Resonator (404) koplanar zueinander sind; oder

wobei das leitende Element (403) konfiguriert ist, den ersten Resonator (401) abzustimmen, mit der ersten Frequenz (f1) in Resonanz zu sein.

3. Vorrichtung (400) nach Anspruch 1, wobei das leitende Element (403) ein Kondensator ist; und optional

wobei eine Resonanz des ersten Resonators (401) eine Funktion einer kapazitiven Reaktanz des Kondensators und eines Widerstands der Folie ist.

4. Vorrichtung nach Anspruch 1, wobei der erste Resonator in Resonanz ist, wenn asymmetrischer Strom einem Pfad folgt, wobei der Pfad eine Funktion der Gestalt und Abmessung der Folie ist.

5. Vorrichtung nach Anspruch 3, wobei der Kondensator ein Interdigital-Kondensator ist.

6. Vorrichtung (400) nach einem der Ansprüche 1-4, wobei das geschlossene Ende (406) des Schlitzes (402) ein kreisförmiges geschlossenes Ende ist.

7. Vorrichtung nach Anspruch 1, wobei eine Gestalt der Folie eine von einem Quadrat, einem Rechteck, einem Kreis, einem Dreieck und einer unregelmäßigen Gestalt ist.

8. Vorrichtung (400) nach Anspruch 1, wobei der zweite Resonator (404) induktiv an den ersten Resonator (401) gekoppelt ist; oder

wobei der zweite Resonator (404) kapazitiv an den ersten Resonator (401) gekoppelt ist.

9. Vorrichtung nach Anspruch 1, wobei der zweite Resonator (404) mit dem Chip (405) abgestimmt ist, mit der zweiten Frequenz (f2) in Resonanz zu sein; und optional

wobei eine Resonanzreaktion des zweiten Resonators (404) eine Funktion der Impedanz des Chips (405) und der Blindinduktivität der Leiterschleife ist.

10. Vorrichtung nach Anspruch 9, wobei die Impedanz des Chips (405) eine einer Funktion von einer Parallelkapazität (Cp), einer Parallelinduktivität (Xr), einem Parallelwiderstand (Rp) und Kombinationen davon ist.

11. Vorrichtung (400) nach Anspruch 1, wobei eine Gestalt der Leiterschleife eine von kreisförmig, elliptisch, quadratisch, rechteckig und dreieckig ist; oder wobei die Leiterschleife in dem zweiten Resonator (404) elektrisch oder induktiv an den Chip (405) gekoppelt ist.

12. Vorrichtung (400) nach Anspruch 1, wobei das geschlossene Ende (406) des Schlitzes (402) größer als der zweite Resonator (404) ist; oder

wobei die gegenüberliegenden Seiten (410) des Schlitzes (402) an dem offenen Ende (408) beginnen und sich allmählich in den inneren Bereich der Folie erstrecken; oder wobei die gegenüberliegenden Seiten (410) an dem geschlossenen Ende (406) miteinander verschmelzen.

13. Verfahren (1100) zum Betreiben einer RFID-Vorrichtung (400) gemäß Anspruch 1, das Verfahren (1100) umfassend:

Bereitstellen (1101) eines ersten Resonators (401), umfassend eine Folie aus elektrisch leitendem Material und ein leitendes Element (403);

Positionieren (1104) eines zweiten Resonators (404) innerhalb des ersten Resonators (401), der zweite Resonator (404) eine Leiterschleife umfassend, die an einen RFID-Chip (405) gekoppelt ist, der den ersten Resonator (401) und den zweiten Resonator (404) einem HF-Signal aussetzt (1106);

Einspeisen (1108) von HF-Leistung in den zweiten Resonator (404) über eine Einspeisestruktur, wobei die Einspeisestruktur mit der Leiterschleife verbunden ist;

Induzieren (1110) der HF-Leistung zu dem ersten Resonator (401), der an den zweiten Resonator (404) gekoppelt ist;

Anregen (1112) des ersten Resonators (401), mit einer ersten Frequenz (f1) betrieben zu werden, und Anregen des zweiten Resonators (404), mit einer zweiten Frequenz (f2) betrieben zu werden;

Abstimmen (1114) des ersten Resonators (401) unter Verwendung des leitenden Elements (403) und des zweiten Resonators (404) unter Verwendung des RFID-Chips (405), mit der ersten Frequenz (f1) bzw. der zweiten Frequenz (f2) in Resonanz zu sein,

wobei sich die zweite Frequenz (f2) von der ersten Frequenz (f1) unterscheidet; und

Abstrahlen (1116) eines Ausgangs-HF-Signals als zirkular polarisiertes Strahlungsmuster als Reaktion auf das eingespeiste HF-Signal.

14. Verfahren (1100) nach Anspruch 13, wobei das Positionieren des zweiten Resonators das Platzieren des zweiten Resonators innerhalb des ersten Resonators umfasst, wobei ein Spalt zwischen dem ersten Resonator und dem zweiten Resonator belassen wird; oder

wobei das Aussetzen (1106) das Abfragen der RFID-Vorrichtung (400) über eine Abfragevorrichtung umfasst, wobei die Abfrage die Übertragung eines Abfragesignals einschließt, Daten von der RFID-Vorrichtung (400) durch den RFID-Chip (405) abzurufen.

15. Verfahren (1100) nach Anspruch 13, wobei das Abstimmen (1114) Folgendes umfasst:

Durchführen einer Impedanzanpassung für den ersten Resonator (401) mit einer kapazitiven Reaktanz des leitenden Elements (403), um mit der ersten Frequenz (f1) betrieben zu werden; oder

Durchführen einer Impedanzanpassung für den zweiten Resonator (404) mit dem RFID-Chip (405), um mit der zweiten Frequenz (f2) betrieben zu werden; oder

wobei das Verfahren (1100) ferner das Ausbilden des ersten Resonators und des zweiten Resonators auf einem Substrat umfasst.

**Revendications**

1. Dispositif RFID (400) comprenant :

un premier résonateur (401) comprenant une feuille de matériau électriquement conducteur et définissant une zone couverte par un périmètre (409) ;

une fente (402) présentant des côtés opposés (410) et la fente (402) s'étendant depuis une extrémité ouverte (408) de la fente (402) commençant au niveau d'un bord du périmètre (409) de la feuille jusqu'à une extrémité fermée (406) s'étirant au sein d'une région interne de la feuille, dans lequel un élément conducteur (403) est placé entre l'extrémité ouverte (408) et l'extrémité fermée (406) et est profilé par la fente (402) dans une région entre l'extrémité ouverte (408) et l'extrémité fermée (406) ; et

un second résonateur (404) comprenant un conducteur de boucle couplé à une puce de circuit intégré (405),

dans lequel la puce (405) est une puce RFID, **caractérisé en ce que**

le second résonateur (404) est contenu au sein de l'extrémité fermée (406) de la fente (402) et est espacé des côtés opposés (410) par un espace (411),

dans lequel le second résonateur (404) comprend une structure d'alimentation connectée au conducteur de boucle, la structure d'alimentation étant configurée pour recevoir un signal RF entrant et alimenter en énergie RF le premier résonateur (401) et le second résonateur (404), l'énergie RF étant reçue en provenance du signal RF entrant,

dans lequel le premier résonateur (401) et le second résonateur (404) sont déclenchés avec une énergie RF fournie en alimentation pour produire un motif de rayonnement,

dans lequel le premier résonateur (401) est conçu pour fonctionner à une première fréquence (f1), dans lequel le second résonateur (404) est conçu pour fonctionner à une seconde fréquence (f2), la seconde fréquence (f2) étant différente de la première fréquence (f1), et

dans lequel le premier résonateur (401) et le second résonateur (404) sont conçus pour produire un motif de rayonnement polarisé circulairement.

2. Dispositif (400) de la revendication 1, dans lequel le premier résonateur (401) et le second résonateur (404) sont formés sur un substrat (407), dans lequel le premier résonateur (401) et le second résonateur (404) sont coplanaires l'un par rapport à l'autre ; ou dans lequel l'élément conducteur (403) est conçu pour accorder le premier résonateur (401) pour qu'il résonne à la première fréquence (f1).

3. Dispositif (400) de la revendication 1, dans lequel l'élément conducteur (403) est un condensateur ; et éventuellement

dans lequel une résonance du premier résonateur (401) est fonction d'une réactance capacitive du condensateur et d'une résistance de la feuille.

4. Dispositif de la revendication 1, dans lequel le premier résonateur résonne lorsqu'un courant asymétrique suit un chemin, dans lequel le chemin est fonction de la forme et de la dimension de la feuille.

5. Dispositif de la revendication 3, dans lequel le condensateur est un condensateur interdigité.

6. Dispositif (400) de l'une quelconque des revendications 1 à 4, dans lequel l'extrémité fermée (406) de la fente (402) est une extrémité fermée circulaire.

7. Dispositif de la revendication 1, dans lequel une forme de la feuille est une forme parmi un carré, un rectangle, un cercle, un triangle ou une forme irrégulière.

8. Dispositif (400) de la revendication 1, dans lequel le second résonateur (404) est couplé de manière inductive au premier résonateur (401) ; ou dans lequel le second résonateur (404) est couplé de manière capacitive au premier résonateur (401).

9. Dispositif de la revendication 1, dans lequel le second résonateur (404) est accordé avec la puce (405) pour résonner à la seconde fréquence (f2) ; et éventuellement dans lequel une réponse résonante du second résonateur (404) est fonction de l'impédance de la puce (405) et de l'inductance réactive du conducteur de boucle.

10. Dispositif de la revendication 9, dans lequel l'impédance de la puce (405) est l'une d'une fonction d'une capacité parallèle (Cp), d'une inductance parallèle (Xr), d'une résistance parallèle (Rp) et de combinaisons de celles-ci.

11. Dispositif (400) de la revendication 1, dans lequel une forme du conducteur de boucle est une forme parmi une forme circulaire, elliptique, carrée, rectangulaire ou triangulaire ; ou dans lequel le conducteur de boucle dans le second résonateur (404) est couplé de manière électrique ou inductive à la puce (405).

12. Dispositif (400) de la revendication 1, dans lequel l'extrémité fermée (406) de la fente (402) est plus grande que le second résonateur (404) ; ou

    dans lequel les côtés opposés (410) de la fente (402) commencent au niveau de l'extrémité ouverte (408) et s'étendent progressivement dans la région interne de la feuille ; ou dans lequel les côtés opposés (410) se rejoignent au niveau de l'extrémité fermée (406).

13. Procédé (1100) pour faire fonctionner un dispositif RFID (400) selon la revendication 1, le procédé (1100) comprenant :

    la fourniture (1101) d'un premier résonateur (401) comprenant une feuille de matériau électriquement conducteur, et d'un élément conducteur (403)
    le positionnement (1104) d'un second résonateur (404) à l'intérieur du premier résonateur (401), le second résonateur (404) comprenant un conducteur de boucle couplé à une puce RFID (405)
    l'exposition (1106) du premier résonateur (401) et du second résonateur (404) à un signal RF ;
    l'alimentation (1108) en énergie RF du second résonateur (404) par l'intermédiaire d'une structure d'alimentation, dans lequel la structure d'alimentation est connectée au conducteur de boucle ;
    l'induction (1110) de l'énergie RF vers le premier résonateur (401) couplé au second résonateur (404) ;
    l'excitation (1112) du premier résonateur (401) pour qu'il fonctionne à une première fréquence (f1) et l'excitation du second résonateur (404) pour qu'il fonctionne à une seconde fréquence (f2) ;
    l'accord (1114) du premier résonateur (401) à l'aide de l'élément conducteur (403) et du second résonateur (404) à l'aide de la puce RFID (405) pour qu'ils résonnent à la première fréquence (f1) et à la seconde fréquence (f2) respectivement,
    dans lequel la seconde fréquence (f2) est différente de la première fréquence (f1) ; et
    le rayonnement (1116) d'un signal RF de sortie en tant que motif de rayonnement polarisé circulairement en réponse au signal RF fourni en alimentation.

14. Procédé (1100) de la revendication 13, dans lequel le positionnement du second résonateur comprend le placement du second résonateur à l'intérieur du premier résonateur, en laissant un espace entre le premier résonateur et le second résonateur ; ou dans lequel l'exposition (1106) comprend l'interrogation du dispositif RFID (400) par l'intermédiaire d'un interrogateur, dans lequel l'interrogation comprend la transmission d'un signal d'interrogation pour récupérer des données à partir du dispositif RFID (400) à travers la puce RFID (405).

15. Procédé (1100) de la revendication 13, dans lequel l'accord (1114) comprend :

    la réalisation d'une adaptation d'impédance pour le premier résonateur (401) avec une réactance capacitive de l'élément conducteur (403) pour qu'il fonctionne à la première fréquence (f1) ; ou
    la réalisation d'une adaptation d'impédance pour le second résonateur (404) avec la puce RFID (405) pour qu'il fonctionne à la seconde fréquence (f2) ; ou

dans lequel le procédé (1100) comprend en outre la formation du premier résonateur et du second résonateur sur un substrat.

FIG. 1A
PRIOR ART

FIG. 1B
PRIOR

FIG. 1C
IOR ART

FIG. 2
PRIOR ART

FIG. 3
PRIOR ART

FIG. 4

FIG. 5A

FIG. 5B

FIG. 6A

FIG. 6B

EP 4 460 782 B1

FIG. 7

FIG. 8

FIG. 9A

FIG. 9B

FIG. 10

1100

PROVIDE A FIRST RESONATOR COMPRISING A SHEET AND A CONDUCTIVE MEMBER — 1101

POSITION A SECOND RESONATOR WITHIN THE FIRST RESONATOR, THE SECOND RESONATOR COMPRISING A LOOP CONDUCTOR AND AN RFID CHIP — 1104

EXPOSE THE FIRST RESONATOR AND THE SECOND RESONATOR TO AN RF SIGNAL — 1106

FEED RF POWER TO THE SECOND RESONATOR VIA FEEDING STRUCTURE, WHEREIN THE FEEDING STRUCTURE IS CONNECTED TO THE LOOP CONDUCTOR — 1108

INDUCE THE RF POWER TO THE FIRST RESONATOR COUPLED TO THE SECOND RESONATOR — 1110

EXCITE THE FIRST RESONATOR AND THE SECOND RESONATOR TO OPERATE AT AN OPERATING FREQUENCY — 1112

TUNE THE FIRST RESONATOR USING THE CONDUCTIVE MEMBER AND THE SECOND RESONATOR USING THE RFID CHIP TO RESONATE AT THE OPERATING FREQUENCY — 1114

RADIATE AN OUTPUT RF SIGNAL IN RESPONSE TO THE FED RF SIGNAL — 1116

FIG. 11

FIG. 12

FIG. 13

FIG. 14

FIG. 15

FIG. 16

FIG. 17

FIG. 18

FIG. 19

FIG. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018123221 A1

- WO 2014210000 A1